# FASCICULE DE BREVET EUROPEEN

(11) **EP 2 082 923 B1**
(45) Date de publication et mention de la délivrance du brevet: **18.08.2010**
(21) Numéro de dépôt: 09151096.6
(22) Date de dépôt: 22.01.2009
(51) Int. Cl.: B60R 13/00, B60Q 1/04, F21V 17/16, F21V 17/00, F16B 2/22

(54) **Agencement pour le montage d'un enjoliveur à l'intérieur d'un boîtier de projecteur comportant des moyens de fixation de l'enjoliveur sur une glace de fermeture du boîtier**
Anordnung zur Montage einer Zierkappe im Innern eines Scheinwerfergehäuses, die mit Befestigungsmitteln für die Zierkappe auf einem Verschlussglas des Gehäuses ausgestattet ist
Arrangement for the installation of a trim inside a headlight casing comprising means for fixing the trim to a piece of glass that seals the casing

(30) Priorité: 28.01.2008 FR 0800453
(43) Date de publication de la demande: 29.07.2009
(73) Titulaire: VALEO VISION, 93012 Bobigny (FR)
(72) Inventeur: Contreras, Antonio c/o Valeo Vision, 93000, Bobigny (FR); Rubia, Juan Antonio c/o Valeo Vision, 93000, Bobigny (FR); Diaz Martin, José Maria c/o Valeo Vision, 93000, Bobigny (FR)

(56) Documents cités:
- DE-A1- 10 311 688
- DE-A1- 10 331 835
- DE-B3- 10 354 991
- FR-A- 2 805 506
- US-A1- 2004 179 366

## Description

L'invention se rapporte à un agencement pour le montage d'un enjoliveur à l'intérieur d'un boîtier de projecteur de véhicule automobile.

L'invention se rapporte plus particulièrement à un agencement pour le montage d'un enjoliveur à l'intérieur d'un boîtier de projecteur de véhicule automobile qui comporte :
- une glace avant de fermeture d'une ouverture avant du boîtier, la glace comportant un rebord périphérique qui est destiné à être reçu selon une direction longitudinale de montage dans une gorge de fixation du pourtour de l'ouverture du boîtier ;
- un enjoliveur qui est destiné à être logé à l'intérieur du boîtier et qui comporte au moins une patte longitudinale de fixation destinée à être reçue selon ladite direction longitudinale de montage dans ladite gorge de fixation du boîtier de manière à être plaquée contre une face interne du rebord périphérique de la glace dans une position assemblée avec la glace.

Un tel agencement est décrit dans le document DE-A1-10311688 qui divulgue également le préambule de la revendication 1.

Dans les projecteurs, un jeu est réservé entre le réflecteur et les parois intérieures du boîtier pour permettre le pivotement du réflecteur. Ce jeu laisse apparentes les parois intérieures peu esthétiques du boîtier à travers la glace du projecteur. Il est donc connu de le masquer en logeant un enjoliveur à l'intérieur du boîtier.

Ce jeu est accentué dans certains types de projecteurs de véhicule automobile comportant un module optique mobile, par exemple les projecteurs équipés de lampes à Xénon, munis de moyens pour faire pivoter les faisceaux lumineux qu'ils émettent : orientation verticale des faisceaux lumineux en fonction de l'assiette du véhicule ou encore orientation horizontale en fonction de la position angulaire du volant. Le pivotement du faisceau lumineux est obtenu par pivotement d'au moins un réflecteur du projecteur.

L'enjoliveur est fixé au boîtier par l'intermédiaire de pattes de fixation qui sont insérés dans une gorge de fixation qui s'étend sur le pourtour de l'ouverture avant du boîtier. Dans cette même gorge de fixation, un rebord périphérique de la glace est reçu pour fixer de manière étanche la glace de fermeture.

Selon un procédé de montage connu du projecteur, les pattes de fixation de l'enjoliveur sont positionnées contre une face interne du rebord de la glace dans une position assemblée, sans que l'enjoliveur soit fixé à la glace. Puis, un cordon de colle ayant préalablement été déposé au fond de la gorge de fixation, le rebord de glace et les pattes de fixation sont ensuite insérés simultanément vers l'arrière selon une direction de montage le plus souvent longitudinale dans la gorge de fixation du boîtier jusqu'à une position montée dans laquelle ils écrasent le cordon de colle.

L'enjoliveur et la glace doivent être maintenus dans cette position montée jusqu'à ce que leur adhésion avec le cordon de colle soit suffisante pour leur fixation, c'est-à-dire jusqu'à ce que l'enjoliveur et la glace soient fixés conjointement par collage au boîtier par la colle, une fois la colle polymérisée.

Cependant, l'enjoliveur est positionné sur la glace en position assemblée préalablement à leur montage dans la gorge de fixation du boîtier. Or, il arrive fréquemment que les deux pièces glisses l'une par rapport à l'autre entre l'instant de leur positionnement mutuel et leur montage sur le boîtier, parce que la colle n'est pas encore polymérisée. Cela oblige à des rectifications de positionnement juste avant l'opération de montage qui sont coûteuses en temps.

En outre, le maintien en position montée de l'enjoliveur et de la glace lors de leur prise dans la colle n'est pas aisé car l'enjoliveur est susceptible de bouger indépendamment de la glace. Il arrive ainsi que l'enjoliveur et/ou la glace ne soient pas dans la position montée voulue après leur fixation.

De plus, l'enjoliveur étant logé à l'intérieur du boîtier pendant l'opération de collage, il n'est pas possible de le maintenir individuellement ni d'en corriger la position car la glace interdit l'accès à l'intérieur du boîtier par l'ouverture.

Ce problème est d'autant plus critique que, de nos jours, les projecteurs jouent un rôle très important dans l'aspect extérieur du véhicule automobile. Les tolérances de fabrication des projecteurs sont ainsi très faibles, et la moindre erreur de positionnement est considérée comme un défaut rédhibitoire.

Il est connu de remédier à ce problème en fixant l'enjoliveur l'intérieur du boîtier préalablement au montage de la glace par exemple par des vis.

Cependant, cette solution requiert de réaliser des zones de fixation pour l'enjoliveur à l'intérieur du boîtier et de prévoir des vis de fixation. Cette solution est donc onéreuse et peu adaptée à une production en grande série.

Pour résoudre notamment ces problèmes, l'invention propose un agencement du type décrit précédemment, **caractérisé en ce qu**'il comporte des moyens pour fixer, préalablement à leur montage sur le boîtier, l'enjoliveur à la glace dans sa position assemblée par l'intermédiaire de sa patte de fixation.

Selon d'autres caractéristiques préférentielles de l'invention :
- la patte de fixation de l'enjoliveur est fixée à la glace par emboîtement élastique selon une direction d'emboîtement dans des moyens de fixation de forme complémentaire portés par le rebord périphérique de la glace ;
- la direction d'emboîtement est parallèle à la direction de montage ;
- les moyens de fixation de forme complémentaire de la glace comportent deux coulisses dans lesquelles la patte de fixation est reçue en position assemblée et qui immobilisent la patte de fixation perpendiculairement à la direction d'emboîtement dans tous les sens ;

- chaque coulisse présente une section transversale en forme de "L", une âme de la coulisse s'étendant perpendiculairement depuis la face interne du rebord périphérique de la glace, et une aile s'étendant perpendiculairement à l'âme en direction de l'autre coulisse ;
- les moyens de fixation comportent un ergot de blocage qui s'étend en saillie depuis la face interne du rebord périphérique de la glace et qui est agencé entre les deux coulisses de manière à être reçu dans un cran de la face inférieure de la patte de fixation, lors de l'emboîtement, par déformation élastique de la patte de fixation pour empêcher le retrait de la patte de fixation après emboîtement dans sa position assemblée ;
- l'ergot de blocage comporte une rampe inclinée de manière à déformer automatiquement la patte de fixation lors de l'emboîtement ;

Selon d'autres caractéristiques préférentielles de l'invention, les moyens de fixation comportent au moins une face verticale de butée qui est agencée à l'extrémité avant des coulisses et contre laquelle une face de la patte de fixation est susceptible de venir en butée pour limiter le déplacement longitudinal vers l'avant de la patte de fixation dans sa position assemblée. Selon une variante de réalisation, ladite face verticale de butée est formée par la face verticale d'extrémité arrière d'une saillie parallélépipédique interposée entre les coulisses et la portion de fermeture de la glace, l'extrémité avant de ladite patte de fixation étant susceptible de venir en butée avec la face verticale d'extrémité arrière de ladite saillie parallélépipédique. Selon une autre variante de réalisation, les coulisses comprennent une rainure et une paroi fermant cette rainure vers l'avant, cette paroi constituant ladite face verticale de butée, la patte de fixation comprenant des languettes s'étendant transversalement, les bords d'extrémité avant desdites languettes étant susceptibles de venir en butée contre ladite face verticale de butée. Les termes « avant » et « arrière » dans ce paragraphe sont définis par rapport au sens de fixation de la patte de fixation à la glace, c'est-à-dire vers la face de la glace qui ferme le boîtier du projecteur.

Egalement selon une autre caractéristique de l'invention, les moyens de fixation sont réalisés préférentiellement venus de matière en une seule pièce avec la glace.

La présente invention se rapporte également à un projecteur de véhicule automobile comprenant un agencement selon la présente invention.

D'autres caractéristiques et avantages apparaîtront à la lecture de la description détaillée qui va suivre pour la compréhension de laquelle on se reportera aux dessins annexés parmi lesquels :
- la figure 1 est une vue en perspective éclatée qui représente un projecteur lumineux de véhicule automobile comportant un enjoliveur qui est réalisé selon les enseignements de l'invention ;
- la figure 2 est une vue en perspective à plus grande échelle qui représente une patte de fixation de l'enjoliveur préalablement à son emboîtement dans des moyens de fixation de la glace du projecteur réalisés selon un premier mode de réalisation de l'invention ;
- la figure 3 est une vue en coupe selon le plan de coupe 3-3 de la figure 2 avant assemblage ;
- la figure 4 est une vue en coupe similaire à celle de la figure 3 qui représente la patte de fixation de l'enjoliveur dans une position assemblée sur la glace du projecteur ;
- la figure 5 est une vue similaire à celle de la figure 2 qui représente la patte de fixation de l'enjoliveur et les moyens de fixation de la glace réalisés selon un deuxième mode de réalisation de l'invention ;
- la figure 6 est une vue en coupe selon le plan de coupe 6-6 de la figure 5 avant assemblage ;
- la figure 7 est une vue en coupe similaire à celle de la figure 6 qui représente la patte de fixation de l'enjoliveur dans une position assemblée sur la glace du projecteur.

Dans la suite de la description, on adoptera à titre non limitatif des orientations longitudinale orientée de l'arrière vers l'avant du projecteur, verticale orientée de bas en haut, et transversale orientée de gauche à droite, qui sont désignées par le trièdre "L,V,T" des figures.

Dans la suite de la description et dans les revendications, les termes respectivement interne et externe sont employés pour désigner des faces qui s'étendent longitudinalement et qui sont orientées respectivement vers l'intérieur et vers l'extérieur du boîtier de projecteur.

Par la suite, des éléments ayant des fonctions identiques, analogues ou similaires seront désignés par des mêmes numéros de référence.

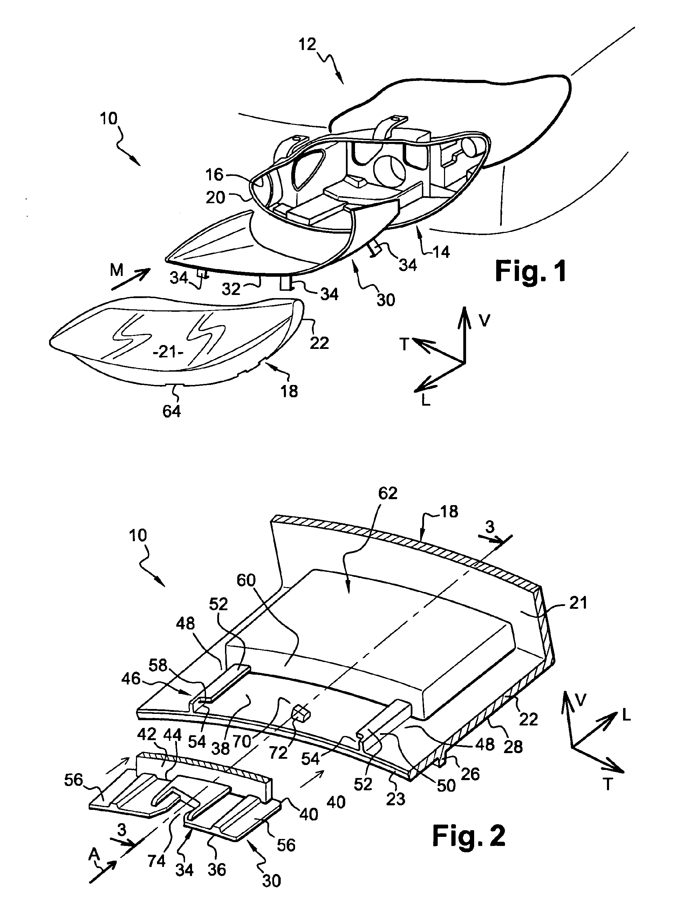

On a représenté à la figure 1 un projecteur 10 lumineux de véhicule automobile 12. Il s'agit ici d'un projecteur avant gauche.

Le projecteur 10 comporte un boîtier 14 qui comporte une ouverture avant 16. Une glace 18 avant transparente de fermeture est montée sur le boîtier 14 de manière à fermer de manière étanche l'ouverture avant 16.

Le boîtier 14 ainsi fermé de manière étanche est destiné à renfermer un ou plusieurs modules optiques (non représentés) qui sont susceptibles d'émettre un faisceau lumineux.

Le boîtier 14 est par exemple réalisé en un matériau plastique.

Pour la fixation étanche de la glace 18, le pourtour de l'ouverture avant 16 du boîtier 14 comporte une gorge 20 de fixation qui est ouverte longitudinalement vers l'avant. La gorge 20 présente ainsi un contour fermé qui entoure l'ouverture avant 16.

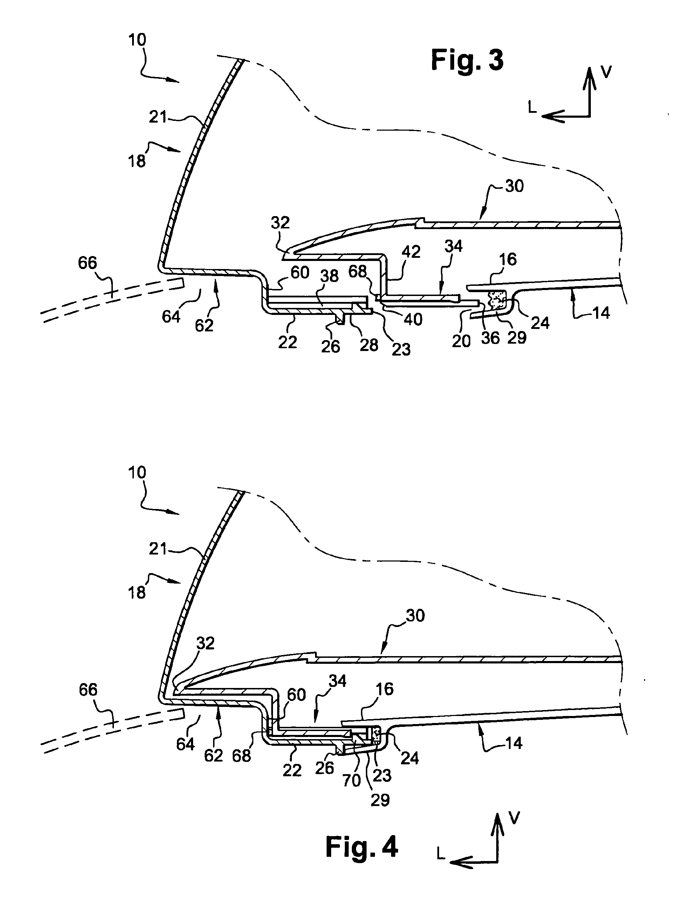

La glace 18 comporte une portion centrale galbée de fermeture 21 globalement verticale, et un rebord périphérique 22 de fixation s'étendant longitudinalement vers l'arrière jusqu'à un bord arrière libre 23 en formant un angle avec la portion de fermeture 21, comme représenté à la figure 3. Le rebord périphérique 22 présente une forme complémentaire de celle de la gorge 20 de manière à ce que son extrémité arrière libre soit reçue dans la gorge 20 jusqu'à une position montée selon une direction longitudinale de montage vers l'arrière comme indiqué par la flèche "M" de la figure 1.

Pour permettre la fixation étanche de la glace 18 sur le boîtier 14, et comme illustré à la figure 3, un cordon de colle 24 est appliqué dans le fond arrière de la gorge 20 de manière que le bord d'extrémité arrière libre 23 du rebord périphérique 22 de la glace 18 en position montée écrase le cordon de colle 24. Le cordon de colle 24 assure ainsi simultanément la fixation de la glace 18 sur le boîtier 14 et l'étanchéité du projecteur 10.

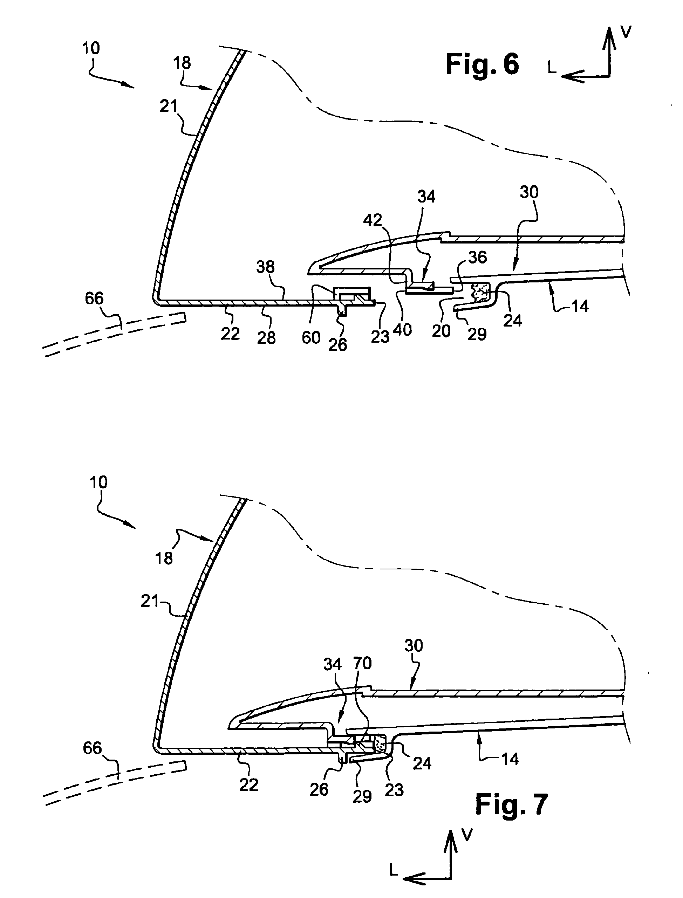

Il est préférable d'éviter que le bord d'extrémité arrière libre 23 du rebord périphérique 22 de la glace 18 ne touche le fond de la gorge 20 en chassant le cordon de colle 24 qui assure l'étanchéité. A cet effet, une nervure 26 saillante perpendiculairement est agencée sur une face externe 28 du rebord périphérique 22 de manière à venir en butée contre une lèvre externe 29 de la gorge 20 pour arrêter la glace 18 dans sa position montée telle que représentée aux figures 4 et 7, c'est-à-dire avant que le bord d'extrémité arrière libre 23 du rebord périphérique 22 ne touche le fond de la gorge 20.

Le projecteur 10 comporte aussi un enjoliveur 30 qui est destiné à être logé à l'intérieur du boîtier 14 de manière à masquer certaines parois apparentes du boîtier 14, ici la paroi inférieure et les parois latérales. L'enjoliveur 30 confère ainsi au projecteur 10 une fois monté un aspect esthétique.

A cet effet, le bord d'extrémité avant 32 de l'enjoliveur 30 épouse sensiblement la forme d'une portion inférieur du contour de la portion de fermeture 21 de la glace 18, de manière décalée vers l'intérieur du boîtier 14 par rapport au rebord périphérique 22 de la glace 18.

L'enjoliveur 30 est destiné à être fixé au boîtier 14 du projecteur 10, ici par trois points de fixation. L'enjoliveur 30 comporte à cet effet trois pattes longitudinales de fixation 34 comportant chacune un bord d'extrémité arrière libre 36 qui est destiné à être reçue dans la gorge 20 du boîtier 14 dans une position montée pour la fixation de l'enjoliveur 30 sur le boîtier 14. L'enjoliveur 30 est destiné à être fixé au boîtier 14 par collage de ses pattes de fixation 34 dans la gorge 20 par l'intermédiaire dudit cordon de colle 24.

Les pattes de fixation 34 présentant une structure analogue, une seule patte de fixation 34 sera décrite par la suite.

La patte de fixation 34 est destinée à être plaquée contre une face interne 38 du rebord périphérique 22 de la glace 18 dans une position assemblée. La patte de fixation 34 se présente ainsi sous la forme d'une plaque plane parallèle à la face interne 38 en vis-à-vis du rebord périphérique 22 de la glace 18. Dans le mode de réalisation représenté et de manière non limitative, la patte de fixation 34 s'étend globalement dans un plan horizontal.

La patte de fixation 34 est reliée par son bord d'extrémité avant 40 au bord d'extrémité avant 32 de l'enjoliveur 30 par l'intermédiaire d'une patte de liaison 42 s'étendant globalement verticalement dans un plan transversal. La jonction entre la patte de fixation 34 et la patte de liaison 42 forme ainsi un coude 44.

Les pattes de fixation 34 sont ici toutes agencées sous la face inférieure de l'enjoliveur 30.

L'enjoliveur 30 est réalisé en un matériau plastique, par exemple par moulage.

Lors du montage du projecteur 10, chaque patte de fixation 34 de l'enjoliveur 30 est positionnée dans une position assemblée sur la glace 18 de manière à être plaquée contre la face interne 38 du rebord périphérique 22 de la glace 18.

Puis les pattes de fixation 34 et le rebord périphérique 22 de la glace 18 sont reçus simultanément vers l'arrière selon la direction longitudinale de montage "M" dans la gorge 20 du boîtier 14 en pénétrant le cordon de colle 24 jusqu'à leur position montée dans laquelle la nervure 26 est en butée sur la lèvre externe 29 de la gorge 20. A cet effet, l'extrémité arrière libre des pattes de fixation 34 est agencée en affleurement du bord d'extrémité arrière libre 23 du rebord périphérique 22 de la glace 18.

L'enjoliveur 30 et la glace 18 sont maintenus dans cette position montée jusqu'à être collé au boîtier 14. L'enjoliveur 30 et la glace 18 sont ainsi fixés conjointement et simultanément au boîtier 14 par collage dans la gorge 20 de fixation.

L'enjoliveur 30 est fixé à la glace 18 en position assemblée par au moins une de ses pattes de fixation 34 préalablement à leur montage simultané sur le boîtier 14. Ainsi la glace 18 et l'enjoliveur 30 sont solidaires ensembles et fixes l'un par rapport à l'autre de manière à former un unique bloc compact qui est aisé à maintenir en position montée dans la gorge 20 de fixation du boîtier 14 jusqu'à la polymérisation de la colle du cordon de colle 24.

La patte de fixation 34 de l'enjoliveur 30 est préférentiellement fixée par emboîtement élastique dans des moyens de fixation 46 de forme complémentaire du rebord périphérique 22 de la glace 18.

Pour la suite de la description, pour l'opération d'emboîtement de l'enjoliveur 30 sur la glace 18, on considérera la glace 18 comme point de référence fixe.

Dans le mode de réalisation représenté à la figure 1, les trois pattes de fixation 34 sont fixées à la glace 18 par des moyens associés de fixation 46 de la glace 18. Les moyens de fixation 46 étant identiques, un seul de ces moyens 46 sera décrit par la suite.

Selon un premier mode de réalisation de l'invention qui est représenté aux figures 2 à 4, les moyens de fixation 46 de forme complémentaire de la glace 18 comportent deux coulisses 48 longitudinales parallèles entre elles qui sont agencées sur la face interne 38 du rebord périphérique 22 en vis-à-vis de la patte de fixation 34 associée.

La patte de fixation 34 de l'enjoliveur 30 est ainsi emboîtée élastiquement dans les moyens de fixation 46 de forme complémentaire dans un sens opposé à la direction longitudinale de montage "M", qu'on appellera par la suite direction longitudinale d'emboîtement "A".

La patte de fixation 34 est reçue entre les coulisses 48 de manière que la patte de fixation 34 soit immobilisée perpendiculairement à la direction longitudinale d'emboîtement "A" dans tous les sens.

Plus particulièrement, et comme illustré à la figure 3, chaque coulisse 48 présente une section en "L". Une âme 50 longitudinale de la coulisse 48 s'étend perpendiculairement vers le haut depuis la face interne 38 du rebord périphérique 22 de la glace 18, et une aile 52 longitudinale s'étend perpendiculairement à l'âme 50 depuis son bord d'extrémité supérieur en direction de l'autre coulisse 48.

Une rainure 54 longitudinale ouverte en direction de l'autre coulisse 48 est ainsi délimitée verticalement par la face interne 38 du rebord périphérique 22 et par l'aile 52.

Les coulisses 48 s'étendent longitudinalement vers la portion de fermeture 21 de la glace 18 depuis le bord d'extrémité arrière libre 23 du rebord périphérique 22. Les coulisses 48 sont ici interrompues avant d'atteindre la portion de fermeture 21 de la glace 18.

Les bords longitudinaux latéraux de chaque patte de fixation 34 forme des languettes 56 qui s'étendent transversalement en saillie par rapport au coude 44 de jonction avec la patte de liaison 42 associée. Les languettes 56 sont ainsi destinées à être reçue dans chaque coulisse 48 verticalement entre l'aile 52 et la face interne 38 du rebord périphérique 22.

Les extrémités libres de chaque aile 52 sont suffisamment écartées transversalement l'une de l'autre de manière à permettre le passage de la patte de liaison 42 associée à la patte de fixation 34.

La patte de fixation 34 est ainsi reçue entre les âmes 50 des coulisses 48 avec un jeu suffisant pour permettre le coulissement, mais sans qu'une des languettes 56 de la patte de fixation 34 puisse être ôtée verticalement lorsque l'autre languette 56 est transversalement en butée contre l'âme 50 de la coulisse 48 associée.

L'extrémité arrière de l'aile 52 de chaque coulisse 48 comporte une échancrure 58 de manière à faciliter l'insertion de la patte de fixation 34 entre les coulisses 48 en appuyant l'extrémité avant de la patte de fixation 34 verticalement contre la face interne 38 du rebord périphérique 22 entre les deux âmes 50 avant d'engager les languettes 56 dans les rainures 54 selon la direction longitudinale d'emboîtement "A".

Les moyens de fixation 46 comportent aussi une face arrière de butée 60 pour arrêter le coulissement longitudinal vers l'avant de la patte de fixation 34 par rapport à la glace 18 en position assemblée dans laquelle le bord d'extrémité arrière libre de la patte de fixation 34 affleure au bord d'extrémité arrière libre 23 du rebord périphérique 22 de la glace 18.

La face de butée 60 est ici formée par la face verticale d'extrémité arrière d'une saillie parallélépipédique 62 qui est interposée longitudinalement entre les coulisses 48 et la portion de fermeture 21 de la glace 18.

La saillie parallélépipédique 62 est formé par une concavité dans la face externe 28 du rebord périphérique 22. Les parois de la saillie parallélépipédique 62 sont de même épaisseur que le reste du rebord périphérique 22 de manière que son empreinte convexe s'élève verticalement sur la face interne 38 du rebord périphérique 22. La saillie parallélépipédique 62 comporte ainsi une face verticale arrière ainsi qu'une face supérieure horizontale et deux faces verticales latérales qui s'étendent toutes les trois longitudinalement vers l'avant depuis la face arrière jusqu'à la portion de fermeture 21 de la glace 18.

Le bord inférieur de la portion de fermeture 21 de la glace 18 présente donc un évidement 64 à l'emplacement de la saillie parallélépipédique 62. Comme représenté à la figure 4, cet évidement 64 est avantageusement dissimulé derrière un élément de carrosserie 66 lorsque le projecteur 10 est monté sur le véhicule automobile 12.

Comme illustré aux figures 3 et 4, la face avant de la patte de liaison 42 comporte préférentiellement au moins un bossage 68 qui est destiné à venir en contact avec la face arrière de butée 60 de la saillie parallélépipédique 62 pour limiter le coulissement longitudinal de la patte de fixation 34 vers l'avant.

Les moyens de fixation 46 comportent en outre un ergot de blocage 70 qui s'étend verticalement en saillie depuis la face interne 38 du rebord périphérique 22 de la glace 18 et qui est agencé entre les deux coulisses 48.

L'ergot de blocage 70 présente une face arrière biseautée formant une rampe 72 inclinée tandis que sa face avant est perpendiculaire à la face interne 38 du rebord périphérique 22.

La patte de fixation 34 comporte un orifice central traversant formant un cran 74 dans lequel l'ergot de blocage 70 de la face interne 38 du rebord périphérique de la glace 18 est destiné à être emboîté par déformation élastique de la patte de fixation 34 pour empêcher le retrait longitudinal vers l'arrière de la patte de fixation 34 lorsque la patte de fixation 34 est en position assemblée sur la glace 18. Le cran est plus particulièrement agencé transversalement à mi-distance entre les languettes 56 latérales de la patte de fixation 34.

Dans les exemples représentés, le cran 74 est formé par une encoche débouchant longitudinalement dans le bord d'extrémité arrière libre 36 de la patte de fixation 34.

Selon une variante non représentée de l'invention, le cran est formé par un creux qui est formé dans la face inférieure de la patte de fixation et qui ne débouche pas verticalement dans la face supérieure de la patte de fixation.

La rampe 72 inclinée de l'ergot de blocage 70 permet de déformer automatiquement la patte de fixation 34 lors du mouvement de la patte de fixation 34 vers sa position assemblée selon la direction longitudinale d'emboîtement "A".

Les moyens de fixation 46 sont réalisés venus de matière avec la glace 18, par exemple par moulage d'un matériau plastique transparent.

Les pattes de fixation 34 sont aussi réalisées venues de matière avec l'enjoliveur, par exemple par moulage de matériau plastique.

On décrit à présent l'opération d'emboîtement de la patte de fixation 34 de l'enjoliveur 30 dans les moyens de fixation 46 de formes complémentaires associés de la glace 18.

La patte de fixation 34 est agencée verticalement vers l'arrière en vis-à-vis des coulisses 48 comme représenté à la figure 3. Puis la patte de fixation 34 est déplacée vers l'avant selon la direction longitudinale d'emboîtement "A" de manière que les languettes 56 latérales soient reçues dans les rainures 54 des coulisses 48.

Puis le bord d'extrémité avant 40 de la patte de fixation 34 entre en contact avec la rampe 72 de l'ergot de blocage 70. Le coulissement longitudinal se poursuit de manière que la partie centrale de la patte de fixation 34 soit soulevée par déformation élastique du fait du contact avec la rampe 72. Les languettes 56 latérales sont retenues verticalement par les ailes 52 de chacune des coulisses 48. La patte de fixation 34 est ainsi déformée élastiquement en s'arquant, en flexion vers le haut de la patte de fixation 34.

Lorsque le cran 74 de la patte de fixation 34 arrive en coïncidence avec l'ergot de blocage 70, la patte de fixation 34 est rappelée élastiquement vers son état plan de repos et l'ergot de blocage 70 pénètre dans le cran 74.

La face avant de l'ergot de blocage 70 étant orthogonale à la direction longitudinale d'emboîtement "A", la patte de fixation 34 de l'enjoliveur 30 est emprisonnée dans sa position assemblée comme représenté à la figure 4. Ainsi, les pattes de fixation 34 de l'enjoliveur 30 ne peuvent pas être retirées des moyens de fixation 46 associés car la face arrière de l'ergot bute contre le bord transversal avant du cran 74. L'enjoliveur 30 et la glace 18 sont ainsi fixées l'un à l'autre en position assemblée en formant un bloc compact.

Le bloc compact et solidaire formé par l'enjoliveur 30 et la glace 18 est ensuite agencé en position montée sur le boîtier 14 de manière à être fixé par l'intermédiaire du cordon de colle 24. L'enjoliveur 30 étant fixé à la glace 18, il est possible de maintenir l'enjoliveur 30 dans sa position montée par rapport au boîtier 14 en agissant uniquement sur la glace 18 sans risque que l'enjoliveur 30 ne bouge par rapport à la glace 18.

L'opération de montage est ainsi plus précise et les défauts de positionnement de l'enjoliveur 30 et de la glace 18 sur le boîtier 14 sont ainsi moins fréquents.

De plus, l'enjoliveur 30 étant fixé sur la glace 18, le positionnement de l'enjoliveur 30 sur la glace 18 en position assemblée ne doit être effectué qu'une seule fois sans risque de mouvement de l'un par rapport à l'autre avant leur montage sur le boîtier 14.

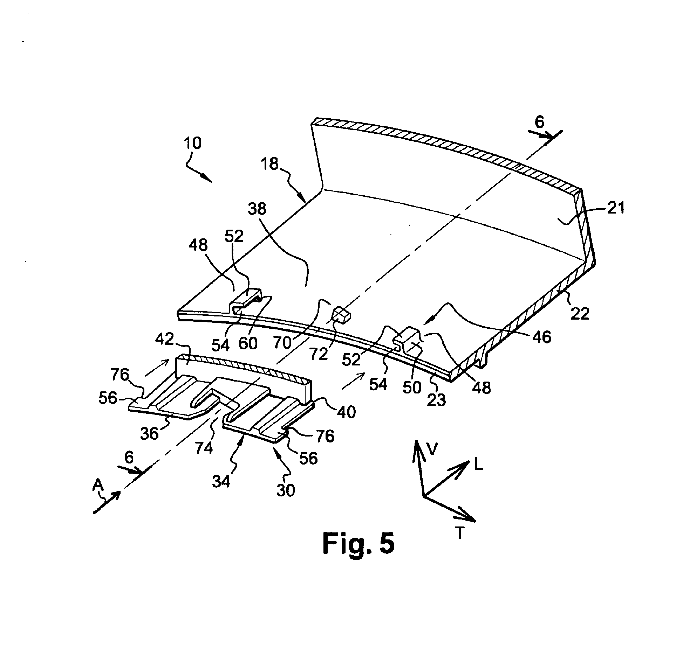

Un deuxième mode de réalisation de l'invention a été représenté aux figures 5 à 7. La patte de fixation 34 présente une structure similaire et des fonctions identiques à celles décrites dans le premier mode de réalisation. De même, les coulisses 48 présentent une structure identique et des fonctions identiques à celles décrites dans le premier mode de réalisation.

Cependant, les moyens pour limiter le coulissement vers l'avant de la patte de fixation 34 par rapport à la glace 18 sont légèrement différents. Chaque coulisse 48 comporte en effet une face arrière de butée 60 associée qui ferme la rainure 54 longitudinalement vers l'avant. La face arrière de butée 60 est formée par une paroi qui s'étend verticalement en saillie depuis la face interne 38 du rebord périphérique 22.

La portion de fermeture 21 de la glace 18 ne présente ainsi pas d'évidement comme c'est le cas dans le mode de réalisation précédent.

Le coulissement vers l'avant de la patte de fixation 34 est arrêté par contact entre les bords d'extrémité avant des languettes 56 avec la face arrière de butée 60. Au besoin, comme c'est le cas ici, les languettes 56 sont écourtées par rapport à la longueur de la patte de fixation 34 de manière à présenter un épaulement avant 76 pour que la patte de fixation 34 soit dans sa position assemblée lorsque les épaulements 76 sont en butée contre la face arrière de butée 60 des rainures 54.

Le fait que les languettes 56 soit écourtées permet de faciliter leur insertion dans les rainures 54 en appuyant verticalement la portion de patte de fixation 34 située en avant des épaulements 76 contre la face interne 38 du rebord périphérique 22 entre les deux âmes 50. Il n'est ainsi pas nécessaire de réaliser des échancrures à l'extrémité arrière des ailes 52 comme c'est le cas dans le premier mode de réalisation.

Du fait de l'absence d'évidement, ce mode de réalisation est particulièrement adapté lorsque le rebord périphérique 22 de la glace 18 est destiné à être agencé en affleurement avec le bord d'un élément de carrosserie 66 du véhicule automobile 12 comme cela est représenté à la figure 7.

Cependant, la glace 18 du premier mode de réalisation est plus simple à fabriquer par moulage que celle du deuxième mode de réalisation. En effet, la glace étant démoulée suivant un axe longitudinal, le moule ne nécessitera de tiroir (ou encore de mouvement dans le moule) que pour le moulage des coulisses.

Selon une variante non représentée de l'invention qui est applicable aux deux modes de réalisation précédemment décrits, l'ergot de blocage est porté par la face inférieure de la patte de fixation tandis que le cran complémentaire est réalisé dans la face interne du rebord périphérique de la glace.

Selon encore d'autres variantes non représentées de l'invention, applicables aux deux modes de réalisation précédemment décrits, l'ergot de blocage peut être agencé soit transversalement, en saillie sur une languette de la patte de fixation et en étant destiné à être reçu, par déformation élastique de la languette, dans un cran de l'âme de la coulisse associée, soit verticalement en saillie sur une languette de la patte de fixation et en étant destiné à être reçu, par déformation élastique de la languette, dans un cran de l'aile de la coulisse associée.

On comprendra que ces deux modes de réalisation peuvent être combinés sur un même projecteur 10 en fonction de la position de la glace 18 par rapport aux éléments de carrosserie 66 adjacents du véhicule automobile 12.

L'agencement selon l'invention permet ainsi de faciliter le montage de l'enjoliveur 30 sur le boîtier 14 tout en conservant une fixation invisible entre le boîtier 14, la glace 18 et l'enjoliveur 30.

## Revendications

1. Agencement pour le montage d'un enjoliveur (30) à l'intérieur d'un boîtier (14) de projecteur (10) de véhicule automobile (12) qui comporte :
- une glace (18) avant de fermeture d'une ouverture avant (16) du boîtier (14), la glace (18) comportant un rebord périphérique (22) qui est destiné à être reçu selon une direction de montage (M) dans une gorge (20) de fixation du pourtour de l'ouverture (16) du boîtier (14) ;
- un enjoliveur (30) qui est destiné à être logé à l'intérieur du boîtier (14) et qui
comporte au moins une patte de fixation (34) et des moyens (46) pour fixer, préalablement à leur montage sur le boîtier (14), l'enjoliveur (30) à la glace (18) dans sa position assemblée par l'intermédiaire de sa patte de fixation (34), **caractérisé en ce que** la patte de fixation est destinée à être reçu selon ladite direction de montage (M) dans ladite gorge (20) de fixation du boîtier (14) de manière à être plaquée contre une face interne (38) du rebord périphérique (22) de la glace (18) dans une position assemblée avec la glace (18).

2. Agencement selon la revendication précédente, **caractérisé en ce que** la patte de fixation (34) de l'enjoliveur (30) est fixée à la glace (18) par emboîtement élastique selon une direction d'emboîtement (A) dans des moyens de fixation (46) de forme complémentaire portés par le rebord périphérique (22) de la glace (18).

3. Agencement selon la revendication précédente, **caractérisé en ce que** la direction d'emboîtement (A) est parallèle à la direction de montage (M).

4. Agencement selon la revendication précédente, **caractérisé en ce que** les moyens de fixation (46) de forme complémentaire de la glace (18) comportent deux coulisses (48) dans lesquelles la patte de fixation (34) est reçue en position assemblée et qui immobilisent la patte de fixation (34) perpendiculairement à la direction d'emboîtement (A) dans tous les sens.

5. Agencement selon la revendication précédente, **caractérisé en ce que** chaque coulisse (48) présente une section transversale en forme de "L", une âme (50) de la coulisse (48) s'étendant perpendiculairement depuis la face interne (38) du rebord périphérique (22) de la glace (18), et une aile (52) s'étendant perpendiculairement à l'âme (50) en direction de l'autre coulisse (48).

6. Agencement selon l'une quelconque des revendications 4 ou 5, **caractérisé en ce que** les moyens de fixation (46) comportent un ergot de blocage (70) qui s'étend en saillie depuis la face interne (38) du rebord périphérique de la glace et qui est agencé entre les deux coulisses (48) de manière à être reçu dans un cran (74) de la face inférieure de la patte de fixation (34), lors de l'emboîtement, par déformation élastique de la patte de fixation (34) pour empêcher le retrait de la patte de fixation (34) après emboîtement dans sa position assemblée.

7. Agencement selon la revendication précédente, **caractérisé en ce que** l'ergot de blocage (70) comporte une rampe (72) inclinée de manière à déformer automatiquement la patte de fixation (34) lors de l'emboîtement.

8. Agencement selon l'une quelconque des revendications 4 à 7, **caractérisé en ce que** les moyens de fixation (46) comportent au moins une face verticale de butée (60) qui est agencée à l'extrémité avant des coulisses (48) et contre laquelle une face (68) de la patte de fixation (34) est susceptible de venir en butée pour limiter le déplacement longitudinal vers l'avant de la patte de fixation (34) dans sa position assemblée.

9. Agencement selon la revendication 8, **caractérisé en ce que** ladite face verticale de butée (60) est formée par la face verticale d'extrémité arrière d'une saillie parallélépipédique (62) interposée entre les coulisses (48) et la portion de fermeture (21) de la glace (18), l'extrémité avant de ladite patte de fixation (34) étant susceptible de venir en butée avec la face verticale d'extrémité arrière de ladite saillie parallélépipédique (62).

10. Agencement selon la revendication 8, **caractérisé en ce que** lesdites coulisses (48) comprennent une rainure (54) et une paroi fermant ladite rainure (54) vers l'avant, ladite paroi constituant ladite face verticale de butée (60), et **en ce que** la patte de fixation (34) comprend des languettes (56) s'étendant transversalement, les bords d'extrémité avant desdites languettes (56) étant susceptible de venir en butée contre ladite face verticale de butée (60).

11. Agencement selon l'une quelconque des revendications précédentes, **caractérisé en ce que** les moyens de fixation (46) sont réalisés venus de matière en une seule pièce avec la glace (18).

12. Projecteur de véhicule automobile comprenant un agencement selon l'une quelconque des revendications 1 à 11.

## Claims

1. Arrangement for assembling an embellisher (30) inside a housing (14) of a headlight (10) of a motor vehicle (12), which comprises:
- a front glass (18) to close a front opening (16) in the housing (14), the glass (18) comprising a peripheral edge (22) which is designed to be received according to a direction of assembly (M) in a securing groove (20) in the periphery of the opening (16) in the housing (14);
- an embellisher (30) which is designed to be accommodated inside the housing (14), and which comprises at least one securing lug (34), and means (46), before the embellisher and glass are fitted in the housing (14), for securing the embellisher (30) to the glass (18) in its assembled position, by means of the securing lug (34),
**characterised in that** the securing lug is designed to be received according to the said direction of assembly (M) in the said securing groove (20) in the housing (14), so as to be placed against an inner surface (38) of the peripheral edge (22) of the glass (18) in a position in which it is assembled with the glass (18).

2. Arrangement according to the preceding claim, **characterised in that** the securing lug (34) of the embellisher (30) is secured to the glass (18) by resilient fitting according to a direction of fitting (A), in securing means (46) with a complementary form which are supported by the peripheral edge (22) of the glass (18).

3. Arrangement according to the preceding claim, **characterised in that** the direction of fitting (A) is parallel to the direction of assembly (M).

4. Arrangement according to the preceding claim, **characterised in that** the securing means (46) with a form complementary to the glass (18) comprise two slides (48) in which the securing lug (34) is received in the assembled position, and which immobilise the securing lug (34) perpendicularly to the direction of fitting (A), in all directions.

5. Arrangement according to the preceding claim, **characterised in that** each slide (48) has a transverse cross-section in the form of an "L", a core (50) of the slide (48) extending perpendicularly from the inner surface (38) of the peripheral edge (22) of the glass (18), and a wing (52) extending perpendicularly to the core (50) in the direction of the other slide (48).

6. Arrangement according to either of claims 4 or 5, **characterised in that** the securing means (46) comprise a locking stud (70) which projects from the inner surface (38) of the peripheral edge of the glass, and is arranged between the two slides (48), such as to be received in a notch (74) in the lower surface of the securing lug (34), during the fitting, by resilient deformation of the securing lug (34), in order to prevent the securing lug (34) from being removed after it has been fitted in its assembled position.

7. Arrangement according to the preceding claim, **characterised in that** the locking stud (70) comprises a ramp (72) which is inclined such as to deform the securing lug (34) automatically during the fitting.

8. Arrangement according to any one of claims 4 to 7, **characterised in that** the securing means (46) comprise at least one vertical stop surface (60) which is provided at the front end of the slides (48), and against which a surface (68) of the securing lug (34) can be abutted in order to limit the longitudinal displacement forwards of the securing lug (34) in its assembled position.

9. Arrangement according to claim 8, **characterised in that** the said vertical stop surface (60) is formed by the vertical rear end surface of a parallelepiped projection (62) which is interposed between the slides (48) and the closure portion (21) of the glass (18), the front end of the said securing lug (34) being able to abut the vertical rear end surface of the said parallelepiped projection (62).

10. Arrangement according to claim 8, **characterised in that** the said slides (48) comprise a groove (54) and a wall which closes the said groove (54) at the front, the said wall constituting the said vertical stop surface (60), and **in that** the securing lug (34) comprises tongues (56) which extend transversely, the front end edges of the said tongues (56) being able to abut the said vertical stop surface (60).

11. Arrangement according to any one of the preceding claims, **characterised in that** the securing means (46) are made in a single piece with the glass (18).

12. Motor vehicle headlight comprising an arrangement according to any one of claims 1 to 11.

## Patentansprüche

1. Anordnung zur Montage einer Zierkappe (30) innen in einem Gehäuse (14) eines Scheinwerfers (10) eines Kraftfahrzeugs (12) mit:
- einer vorderen Scheibe (18) zum Verschließen einer vorderen Öffnung (16) des Gehäuses (14), wobei die Scheibe (18) einen Umfangsrand (22) aufweist, der dazu bestimmt ist, in einer Montagerichtung (M) in einer Nut (20) zur Befestigung der Umrandung der Öffnung (16) des Gehäuses (14) aufgenommen zu werden;
- einer Zierkappe (30), die dazu bestimmt ist, innen im Gehäuse (14) gelagert zu werden, und die wenigstens eine Befestigungslasche (34) und Mittel (46) zum Befestigen der Zierkappe (30) mit Hilfe ihrer Befestigungslasche (34) an der Scheibe (18) in montierter Stellung aufweist, bevor diese am Gehäuse (14) angebracht werden,
**dadurch gekennzeichnet, dass** die Befestigungslasche dazu bestimmt ist, in der Montagerichtung (M) in der Befestigungsnut (20) des Gehäuses (14) so aufgenommen zu werden, dass sie mit der Scheibe (18) in einer montierten Stellung gegen eine Innenseite (38) des Umfangsrands (22) der Scheibe (18) gedrückt wird.

2. Anordnung nach dem vorhergehenden Anspruch ,
**dadurch gekennzeichnet, dass** die Befestigungslasche (34) der Zierkappe (30) an der Scheibe (18) durch elastisches Einstecken in einer Einsteckrichtung (A) in komplementär geformte, durch den Umfangsrand (22) der Scheibe (18) gehaltene Befestigungsmittel (46) befestigt ist.

3. Anordnung nach dem vorhergehenden Anspruch ,
**dadurch gekennzeichnet, dass** die Einsteckrichtung (A) parallel zur Montagerichtung (M) ist.

4. Anordnung nach dem vorhergehenden Anspruch,
**dadurch gekennzeichnet, dass** die komplementär geformten Befestigungsmittel (46) der Scheibe (18) zwei Gleitführungen (48) aufweisen, in denen die Befestigungslasche (34) in montierter Stellung aufgenommen ist und die die Befestigungslasche (34) senkrecht zur Einsteckrichtung (A) in allen Richtungen festhalten.

5. Anordnung nach dem vorhergehenden Anspruch,
**dadurch gekennzeichnet, dass** jede Gleitführung (48) einen L-förmigen Querschnitt aufweist, wobei sich ein Steg (50) der Gleitführung (48) senkrecht von der Innenseite (38) des Umfangsrands (22) der Scheibe (18) aus erstreckt, und wobei sich ein Flügel (52) senkrecht zu dem Steg (50) in Richtung auf die andere Gleitführung (48) erstreckt.

6. Anordnung nach einem der Ansprüche 4 oder 5,
**dadurch gekennzeichnet, dass** die Befestigungsmittel (46) eine Rastnase (70) aufweisen, die von der Innenseite (38) des Umfangsrands der Scheibe vorsteht und die zwischen den beiden Gleitführungen (48) so angeordnet ist, dass sie beim Einstecken durch elastische Verformung der Befestigungslasche in einem Ausschnitt (74) der Innenseite der Befestigungslasche (34) aufgenommen wird, um das Herausziehen der Befestigungslasche (34) nach einem Einstecken in ihre montierte Stellung zu verhindern.

7. Anordnung nach dem vorhergehenden Anspruch,
**dadurch gekennzeichnet, dass** die Rastnase (70) eine Schräge (72) aufweist, die so geneigt ist, dass die Befestigungslasche (34) beim Einstecken automatisch verformt wird.

8. Anordnung nach einem der Ansprüche 4 bis 7,
**dadurch gekennzeichnet, dass** die Befestigungsmittel (46) wenigstens eine senkrechte Anschlagfläche (60) aufweisen, die am vorderen Ende der Gleitführungen (48) angeordnet ist und gegen die eine Seite (68) der Befestigungslasche (34) in Anschlag gebracht zu werden vermag, um die Längsverschiebung der Befestigungslasche (34) nach vorne in ihrer montierten Stellung zu begrenzen.

9. Anordnung nach Anspruch 8,
**dadurch gekennzeichnet, dass** die senkrechte Anschlagfläche (60) durch die äußere senkrechte Rückseite eines parallelepipedischen Vorsprungs (62) gebildet ist, der zwischen die Gleitführungen (48) und das Abdeckteil (21) der Scheibe (18) eingefügt ist, wobei das vordere Ende der Befestigungslasche (34) mit der äußeren senkrechten Rückseite des parallelepipedischen Vorsprungs (62) in Anschlag gebracht zu werden vermag.

10. Anordnung nach Anspruch 8,
**dadurch gekennzeichnet, dass** die Gleitführungen (48) eine Einkerbung (54) und eine die Einkerbung (54) nach vorne verschließende Wand aufweisen, wobei die Wand die senkrechte Anschlagfläche (60) bildet, und dass die Befestigungslasche (34) quer verlaufende Zungen (56) aufweist, wobei die vorderen äußeren Ränder der Zungen (56) gegen die senkrechte Anschlagfläche (60) in Anschlag gebracht zu werden vermögen.

11. Anordnung nach einem der vorhergehenden Ansprüche,
**dadurch gekennzeichnet, dass** die Befestigungsmittel (46) einstückig mit der Scheibe (18) geformt ausgeführt sind.

12. Kraftfahrzeugscheinwerfer mit einer Anordnung nach einem der Ansprüche 1 bis 11.
